# EUROPÄISCHE PATENTANMELDUNG

(11) **EP 1 411 436 A1**
(43) Veröffentlichungstag der Anmeldung: **21.04.2004**
(21) Anmeldenummer: 02360281.6
(22) Anmeldetag: 15.10.2002
(51) Int. Cl.: G06F 13/00

(54) **Signalverarbeitungsvorrichtung, Verfahren zum Betreiben und Herstellungsverfahren der Signalverarbeitungsvorrichtung**

(71) Anmelder: ALCATEL, 75008 Paris (FR)
(72) Erfinder: Kopp, Dieter, 75428 Illingen (DE); Kehren, Helmut, 71638 Lundwigsburg (DE); Petry, Carl, 71282 Hemmingen (DE); Gerlach, Christian, 71254 Ditzingen (DE)
(74) Vertreter: Rausch, Gabriele, Dr.

(57) **Zusammenfassung**

Eine Signalverarbeitungsvorrichtung umfasst einen Speicher, eine Signalverarbeitungseinrichtungen sowie zumindest eine Steuereinrichtung und einen Bus, der den Speicher, die Signalverarbeitungseinrichtungen und die zumindest eine Steuereinrichtung miteinander verbindet. Die Signalverarbeitungsvorrichtung ist dabei derart konfigurierbar ist, dass der Bus und die Steuereinrichtung mit nach Art und/oder Anzahl unterschiedlichen, vorbestimmten Einrichtungen betreibbar sind, wobei die Art und die maximale Anzahl der Einrichtungen vorgegeben ist.

## Beschreibung

Die Erfindung betrifft eine Signalverarbeitungsvorrichtung, ein Verfahren zum Betreiben und ein Herstellungsverfahren der Signalverarbeitungsvorrichtung.

Signalverarbeitungsvorrichtungen werden grundsätzlich in einer Vielzahl unterschiedlicher Produkte wie Endbenutzergeräten, z.B. Customer Premises Equipment (CPE) oder Home Office Gateways, Mobiltelefone, Notebooks, etc., und Netzwerkgeräten, z.B. Trunk Gateways, oder Vermittlungsstellen , eingesetzt. Diese verschiedenen Produkte stellen unterschiedliche Anforderung an die Qualität und Quantität der Signalverarbeitung, also beispielsweise Datendurchsatz, Anzahl der Kanäle, Bearbeitungszeiten, Bearbeitungsalgorithmen, wie Kodierungs- und Dekodierungsalgorithmen, Komprimierungs- und Dekomprimierungsalgorithmen, und dergleichen. Die Bearbeitung und Übertragung von Video- und Audiodaten, insbesondere digitalisierter Sprache, in Kommunikationsnetzwerken, z.B. für Voice over IP (VoIP) Anwendungen, ist nicht nur rechenintensiv und sondern auch eine wesentliches Beurteilungskriterium für die Qualität und Leistungsfähigkeit eines Kommunikationsnetzwerkes. Für die effiziente Bearbeitung solcher Daten bzw. Signale werden insbesondere Signalverarbeitungsvorrichtungen verwendet.

Signalverarbeitungsvorrichtungen sind üblicherweise in Form von integrierten Schaltungen, die auch als Application Specific Integrated Circuit (ASIC) bezeichnet werden, realisiert. Diese bestehen zumindest aus einer Ein- und Ausgabeeinrichtung, einer Signalverarbeitungseinrichtung und einem Bus, der die Signalverarbeitungseinrichtung mit der Ein- und Ausgabeeinrichtung verbindet. Die Ein- und Ausgabeeinrichtungen kommunizieren mit Schnittstellen (PCI, Utopia, ATM, Ethernet etc.) oder sind Schnittstellen zur Peripherie der Signalverarbeitungsvorrichtung, z.B. zu externen Speicherbausteinen, Benutzereingabemitteln wie Tastatur, Maus, Mikrofon, Anzeigemitteln (LED, Monitor), unterschiedlichen Arten von Netzwerken wie dem Internet, Local Area Networks (LAN), Ethernet-Netzwerken, ISDN, öffentlichen Telefonnetzen und dergleichen. Die Signalverarbeitungseinrichtung ist oft ein digitaler Signalprozessor (DSP). Die bekannten Signalverarbeitungsvorrichtungen sind für spezielle Anwendungen bzw. Einsatzzwecke vorgesehen und in Struktur und Aufbau für den jeweiligen Einsatzzweck optimiert. Beispielsweise gibt es Signalverarbeitungsvorrichtungen, die für Endbenutzeranwendungen wie einem mobilen Telefon oder für komplexe Gateway-Anwendungen zugeschnitten sind.

Eine Signalverarbeitungsvorrichtung für ein Endbenutzergerät umfasst typischerweise eine Ein- und Ausgabeeinrichtung, einen DMA-Baustein (Direct Memory Access) und einen DSP. Der DSP führt nicht nur die Signalverarbeitung aus, sondern steuert auch die Datenkommunikation über die Ein- und Ausgabeeinrichtung. Dem DSP kann zusätzlich ein RISC-Prozessor zugeordnet sein, um die Rechenleistung des DSP ausschließlich für die Signalverarbeitung bereitzuhalten.

Eine typische Signalverarbeitungsvorrichtung für Trunk-Gateway-Anwendungen für die parallele Bearbeitung einer Vielzahl von Datenkanälen umfasst dagegen mehrere Ein- und Ausgabeeinrichtungen entsprechend der Peripherie des vorgesehenen Einsatzortes, DMA-Bausteine, eine entsprechend Anzahl DSP's, ein Bussystem und einen RISC-Prozessor, der Ein- und Ausgabe von Daten und die Datenkommunikation innerhalb der Signalverarbeitungsvorrichtung steuert. Je nach Einsatzzweck weisen solche Signalverarbeitungsvorrichtungen zusätzlich Beschleunigerbausteine auf, die eine bestimmte (Rechen)Funktionalität als Hardware bereitstellen und daher insbesondere bei zeitsensitiven Anwendungen, z.B. der Sprachverarbeitung, eingesetzt werden.

Nachteilig am vorstehend beschriebenen Stand der Technik ist, dass die bekannten Signalverarbeitungsvorrichtungen für einen speziellen Einsatzzweck optimiert sind, der einer flexiblen Verwendung der Signalverarbeitungsvorrichtungen entgegensteht. Die Signalverarbeitungsvorrichtungen sind jeweils auf bestimmte Produkte oder Produktgruppen zugeschnitten und es besteht daher eine enge Bindung an diese Produkte. Folglich sind die Signalverarbeitungsvorrichtungen insbesondere hinsichtlich Herstellung und Entwicklung auch der Marktsituation der jeweilige Produkte unterworfen. Die Bereiststellung von Signalverarbeitungsvorrichtungen für einzelne Produkte ist darüber hinaus kostenintensiv.

Demgegenüber liegt der Erfindung die Aufgabe zugrunde eine Signalverarbeitungsvorrichtung zu schaffen, die eine flexible Verwendung in Produkten mit unterschiedlichen Anforderungen hinsichtlich der Signalverarbeitung ermöglicht. Es ist ein weiteres Ziel der Erfindung eine Signalverarbeitungsvorrichtung zu schaffen, die auf einfache Art und Weise an unterschiedliche Einsatzzwecke anpassbar ist. Die Signalverarbeitungsvorrichtung soll insbesondere sowohl für den Einsatz in Endbenutzergeräten als auch in Netzwerkservern geeignet sein.

Zur Lösung dieser Aufgabe wird eine Signalverarbeitungsvorrichtung mit den Merkmalen des Anspruches 1, ein Verfahren zum Betreiben der Signalverarbeitungsvorrichtung mit den Merkmalen des Anspruches 9 und ein Herstellungsverfahren mit den Merkmalen des Anspruches 10 vorgeschlagen.

Die erfindungsgemäße Signalverarbeitungsvorrichtung zeichnet sich durch eine skalierbare Konfigurierbarkeit aus. Ein Grundgedanke der Erfindung ist, die Signalverarbeitungsvorrichtung mit einer universellen Basisarchitektur, die zumindest eine Steuereinrichtung und einen Bus umfasst, auszustatten, die mit relativ geringem Aufwand und zeitnah mit nach Art und Anzahl vorbestimmten Einrichtungen, wie digitalen Signalprozessoren, Ein-/Ausgabeeinrichtungen, Beschleunigerbausteine und dergleichen kombinierbar ist, die das jeweilige gewünschte Anforderungsprofil abdecken. Dadurch wird es ermöglicht, die Signalverarbeitungsvorrichtung innerhalb des Herstellungsprozesses und nach der Herstellung an unterschiedliche Anforderungsprofile anzupassen. Die Signalverarbeitungsvorrichtung weist Einrichtungen auf, die bezüglich der unterschiedlichen Einsatzanforderungen im wesentlichen nicht angepasst werden müssen. Diese bilden die Basisstruktur, die derart ausgelegt ist, dass sie mit nach Art und Anzahl unterschiedlichen anforderungsrelevanten Einrichtungen aus einer vorbestimmten Gruppe von Einrichtungen, die je nach Zusammenstellung unterschiedliche Anforderungsprofile befriedigen, kombinierbar ist. Die Anzahl der verwendeten vorbestimmten Einrichtungen beeinflusst die benötigte Chipfläche und somit die Herstellungskosten. Die Erfindung ermöglicht eine vorteilhafte und schnelle Anpassbarkeit der Vorrichtung in Hinblick auf Kostenaspekte, vorgesehene Stückzahlen und Verwendbarkeit.

Ein weiterer Aspekt der Erfindung ist die Konfigurierbarkeit der erfindungsgemäßen Signalverarbeitungsvorrichtung nach der Herstellung. Die Aufgabenverteilung und die Datenkommunikation der Einrichtungen der Signalverarbeitungsvorrichtung untereinander ist nicht fest vorgegeben, sondern wird durch eine Steuereinrichtung je nach Einsatzzweck vorgegeben. Ausgenommen davon ist eine Verteilung von Aufgaben die durch die Art der Einrichtung selbst vorgegeben sind, z.B. Ein- und Ausgabefunktionen werden durch Ein- und Ausgabeeinrichtungen und nicht durch Signalverarbeitungseinrichtungen zur Verfügung gestellt. Dagegen ist die Aufteilung einer Funktionalität (Signalverarbeitungsfunktionalität, Eingabefunktionalität, Ausgabefunktionalität etc.) auf mehrere (identische) Einrichtungen oder Einrichtungen der gleichen Funktionalitätsart nicht fest vorgegeben und wird durch die Steuereinrichtung je nach Anwendungszweck festgelegt. Beispielsweise kann die Ein- und Ausgabe über eine einzelne Ein- und Ausgabeeinrichtung oder mittels mehrerer Ein- und Ausgabeeinrichtungen vorgesehen sein, wobei einzelne Ein- und Ausgabeeinrichtungen nur für die Eingabe oder Ausgabe und andere Einund Ausgabeeinrichtungen sowohl für die Ein- und Ausgabe vorgesehen sein können. Einrichtungen der gleichen Funktionalitätsart sind beispielsweise digitale Signalprozessoren und Beschleunigerbausteine, die beide der Signalverarbeitung dienen. Die Signalverarbeitung kann mittels eines einzelnen Digitalen Signalprozessors (DSP) oder einer Mehrzahl von DSP's erfolgen, die parallel oder hintereinander geschaltet sind. Die DSP's können unterschiedliche Signalverarbeitungsaufgaben erfüllen, z.B. unterschiedliche Codierungs-, Decodierungs-, Komprimierungs-, Dekomprimierungsverfahren ausführen. Den DSP's können Beschleunigerbausteine vor- oder nachgeschaltet sein. Die Konfiguration der Signalverarbeitungsvorrichtung, z.B. welche Daten von welcher Einrichtung bearbeitet oder übertragen werden und wie der Datenfluss innerhalb der Signalverarbeitungsvorrichtung erfolgt, wird durch die Steuereinrichtung festgelegt.

Bei einer bevorzugten Ausgestaltung der Signalverarbeitungsvorrichtung sind der Bus und die Steuereinrichtung derart ausgestaltet, dass beim Betrieb des Busses und der Steuereinrichtung mit nach Art und/oder Anzahl unterschiedlichen, vorbestimmten Einrichtungen im wesentlichen gleiche Zeitbedingungen erfüllt sind. Ein solches Zeitverhalten wird insbesondere durch die Konstruktion der Basisarchitektur, z.B. der Auslegung der Treiber, der Kapazität des Busses oder Bus-Systems, die Berücksichtigung der Signalverzögerungszeiten und dergleichen Charakteristika gewährleistet. Vorzugsweise sind die vorbestimmten Einrichtungen an den Betrieb mit dem Bus und der Steuereinrichtung angepasst.

Bei einer bevorzugten Ausführungsform der Erfindung umfassen die vorbestimmten Einrichtungen, die zur Konfiguration der Signalverarbeitungsvorrichtung verwendet werden, Einrichtungen für den direkten Speicherzugriff (DMA), Ein- und/oder Ausgabeeinrichtungen, programmierbare Signalverarbeitungseinrichtungen (DSP) und nicht-programmierbare Signalverarbeitungseinrichtungen.

Bei einer Weiterbildung der Erfindung ist durch die Steuereinrichtung zumindest die Aufgabenverteilung der Signalverarbeitungseinrichtungen der vorgegebene Einrichtungen bestimmt und/oder die Datenkommunikation zwischen den Einrichtungen vorgegeben. Dieses erfolgt z.B. durch Befehle der Steuereinrichtung, die den Signalverarbeitungseinrichtungen Aufgaben zuweisen und/oder Ein- und Ausgabekanäle durch Busadressen zuordnet. Die Steuereinrichtung kann auch Task Buffer an die Signalverarbeitungseinrichtungen übergeben. Diese Task Buffer umfassen Informationen welche Aufgabe eine Signalverarbeitungseinrichtung zu bearbeiten hat, welche Parameter dabei zu verwenden sind und/oder Informationen, woher die Eingansdaten kommen und wohin die Ausgangsdaten zu transferieren sind. Für jede einzelne Aufgabe, z.B. die Bearbeitung eines Datenpackets, ist vorzugsweise ein Task Buffer vorgesehen. Die Steuereinrichtung entscheidet, welche Task Buffer welchen Signalverarbeitungseinrichtungen zugeordnet werden.

Bei einer Fortbildung der erfindungsgemäßen Signalverarbeitungsvorrichtung sind die Steuereinrichtung und die vorbestimmten Einrichtungen derart ausgestaltet sind, dass mittels der zumindest einen Steuereinrichtung einzelne Einrichtungen der Signalverarbeitungsvorrichtung ein- und abschaltbar sind.

Bei einer vorteilhafte Ausgestaltung der Signalverarbeitungsvorrichtung ist der Bus als ein Bussystem mit einer Mehrzahl von Bussen realisiert. Die Signalverarbeitungsvorrichtung weist vorzugsweise eine Mehrzahl identischer Signalverarbeitungseinrichtungen auf.

Die Ein - und/oder Ausgabeeinrichtungen der Signalverarbeitungsvorrichtung sind insbesondere für Ein- und/oder Ausgaben mittels Internet-, ATM-, TDM und/oder PCM-Protokoll vorgesehen. Zu diesem Zweck können die Ein - und/oder Ausgabeeinrichtungen beispielsweise eine Internetprotokoll-Schnittstelle, ATM-Schnittstelle, TDM-Schnittstelle und/oder PCM-Schnittstelle umfassen oder für ein Zusammenwirken mit einer solchen Schnittstelle angepasst sein.

Die zumindest eine Steuereinrichtung der Signalverarbeitungsvorrichtung ist vorzugsweise ein RISC-Prozessor ist. Die programmierbare Signalverarbeitungseinrichtungen der Signalverarbeitungsvorrichtung sind vorzugsweise Digitale Signalprozessoren (DSP) oder RISC-Prozessoren. Nicht-programmierbare Signalverarbeitungseinrichtungen sind beispielweise Hardware-Beschleuniger mit spezifisch ausgelegter fest vorgegebener hardwarebestimmter Funktionalität. Diese führen bestimmte Teilaufgaben der Signalverarbeitung mit hoher Effizienz bezüglich Leistung, Geschwindigkeit Chipfläche usw. aus. Verwendbare Hardware-Beschleuniger sind dem Fachmann bekannt.

Mit der Herstellung der Signalverarbeitungsvorrichtung wird eine Rahmen-Konfiguration der Signalverarbeitungsvorrichtung vorgeben bzw. festgelegt. Das heißt, es wird bestimmt wieviele und welche einzelne Einrichtung aus der Gruppe der vorbestimmten Einrichtungen tatsächlich in die jeweilige Signalverarbeitungsvorrichtung integriert werden. Diese Rahmen-Konfiguration legt die Grenzen fest innerhalb derer die Signalverarbeitungsvorrichtung nach der Herstellung konfigurierbar ist. Nach der Herstellung sind unterschiedliche Konfigurationen der Signalverarbeitungsvorrichtung mittels der Steuereinrichtung einstellbar.

Gemäß einem Verfahren zum Betreiben der konfigurierbaren Signalverarbeitungsvorrichtung ist die Signalverarbeitungsvorrichtung in unterschiedlichen Konfigurationen betreibbar, wobei die Auswahl der Konfiguration in Abhängigkeit von den jeweiligen Anforderungen und eine Änderung der Konfiguration statisch und/oder dynamisch erfolgt. Die unterschiedlichen Konfigurationen der Signalverarbeitungsvorrichtung können auch als unterschiedliche Betriebsarten oder Betriebsmodi der Signalverarbeitungsvorrichtung einstellbar sein.

Die Wahl der Konfiguration bzw. Betriebsart kann bei der Festlegung der Applikation stattfinden. Die Einstellung der Konfiguration bzw. Betriebsart erfolgt statisch, d.h. nicht während des Betriebes des Signalverarbeitungsvorrichtung. Mit anderen Worten: Im Hinblick auf den jeweiligen Einsatzzweck/Applikation werden Vorabeinstellungen vorgenommen. Die Signalverarbeitungsvorrichtung kann für Applikationen wie ATM, IP, MPLS, PCM etc. und unterschiedliche Aufgaben wie Echolöschung, Rauschunterdrückung, Sprachcodierung/-decodierung, Spracherkennung etc. konfiguriert werden. Die gleiche Signalverarbeitungsvorrichtung kann somit für unterschiedliche Applikationen verwendet werden, wodurch Kosten und Entwicklungszeit gespart werden. Andererseits kann bei einer Änderung der Betriebsbedingungen innerhalb einer gegeben Applikation eine Umschaltung sinnvoll sein, z.B. wenn zusätzliche Rechenleistung für Echolöschung oder Rauschunterdrückung benötigt wird. Die Änderung der Konfiguration erfolgt dynamisch, während des Betriebes der Signalverarbeitungsvorrichtung in Hinblick auf geänderte Anforderungen. Wie bereits zuvor erläutert werden mittels der Steuereinheit Aufgaben dynamisch über Task Buffer verteilt und/oder einzelne Verarbeitungseinheiten ein- und abgeschaltet. Der Grad der dynamischen Skalierbarkeit und Konfigurierbarkeit ist durch die Rahmen-Konfiguartion während der Herstellung festgelegt. Kriterien für einen Wechsel der Konfiguration/Skalierung sind beispielsweise die Zuweisung anderer oder weiterer Aufgaben, die Umverteilung der Rechenleistung, die Skalierung der Signalverarbeitungsvorrichtung auf mehr Kanäle oder die Bündelung von Funktionalitäten.

Bei einem Verfahren zur Herstellung der erfindungsgemäßen Signalverarbeitungsvorrichtung, die eine Mehrzahl von Einrichtungen aus einer Gruppe vorbestimmter Einrichtungen und zumindest eine Steuereinrichtung und einen Bus, der die Einrichtungen und die zumindest eine Steuereinrichtung miteinander verbindet, umfasst, wird in Abhängigkeit des vorgesehenen Einsatzzweckes die Art und Anzahl der benötigten Einrichtungen aus der Gruppe der vorbestimmten Einrichtungen ermittelt, eine Basisarchitektur, umfassend einen Bus und eine Steuereinrichtung, verwendet, wobei die Basisarchitektur derart ausgestaltet ist, dass diese mit einer unterschiedlichen Anzahl und Art von Einrichtungen aus der Gruppe der vorbestimmten Einrichtungen zusammenschaltbar ist, eine Gesamtarchitektur der Signalverarbeitungsvorrichtung aus den ermittelten Einrichtungen und der Basisarchitektur derart erstellt, dass diese Einrichtungen nach Art eines Baukastensystems in die Basisarchitektur implementiert werden, eine Maske der Gesamtarchitektur der Signalverarbeitungsvorrichtung erstellt und die Signalverarbeitungsvorrichtung unter Verwendung der Maske hergestellt. Während der Herstellung werden die ermittelten Einrichtungen aus der Gruppe der vorbestimmten Einrichtungen an den Bus/das Bussystem und die Steuereinrichtung angeschlossen. Die Architektur bzw. das Chipdesign der Signalverarbeitungsvorrichtung ist mit der Herstellung festgelegt, aber der jeweilige Datenfluß und/oder die jeweilige Aufgabenverteilung wird bei der Konfiguration der Signalverarbeitungsvorrichtung definiert, die statisch und/oder dynamisch erfolgt.

Bei einem bevorzugtem Verfahren zur Herstellung der Signalverarbeitungsvorrichtung umfasst die Gruppe vorbestimmter Einrichtungen Ein- und/oder Ausgabeeinrichtungen, Einrichtungen zum direkten Speicherzugriff (DMA), programmierbare Signalverarbeitungseinrichtungen (DSP) und nicht-programmierbare Signalverarbeitungseinrichtungen.

Weitere Vorteile und Ausgestaltungen der Erfindung ergeben sich aus der Beschreibung und der beiliegenden Zeichnung.

Es versteht sich, dass die vorstehenden genannten und die nachstehend noch zu erläuternden Merkmale nicht nur in der jeweils angegebenen Kombination sondern auch in anderen Kombinationen oder in Alleinstellung verwendbar sind ohne den Rahmen der vorliegenden Erfindung zu verlassen.

Die Erfindung ist anhand eines Ausführungsbeispieles in den Zeichnungen dargestellt und wird im folgenden unter Bezugnahme auf die Zeichnungen näher erläutert.
- Fig. 1: zeigt ein Blockschaltbild einer erfindungsgemäßen Signalverarbeitungsvorrichtung,
- Fig. 2: zeigt ein Blockschaltbild einer weiteren Ausführungsform der Signalverarbeitungsvorrichtung,
- Fig. 3: zeigt eine schematische Darstellung des Kommunikationspfades einer Konfiguration der Signalverarbeitungsvorrichtung von Fig. 1 oder Fig. 2,
- Fig. 4: zeigt eine schematische Darstellung des Kommunikationspfades einer anderen Konfiguration der Signalverarbeitungsvorrichtung von Fig. 1 oder Fig. 2,
- Fig. 5: zeigt in schematischer Darstellung des Kommunikationspfad einer weiteren Konfiguration der Signalverarbeitungsvorrichtung von Fig. 2,
- Fig. 6: zeigt schematisch die Aufteilung eines Kommunikationsspeicher der Signalverarbeitungseinrichtung,
- Fig. 7: zeigt im Kommunikationsspeicher gespeicherte Aufgaben
- Fig. 8: zeigt ein Blockschaltbild einer bevorzugten Ausführungsform der erfindungsgemäßen Signalverarbeitungsvorrichtung und
- Fig. 9: zeigt ein Blockschaltbild einer weiteren bevorzugten Ausführungsform der erfindungsgemäßen Signalverarbeitungsvorrichtung.

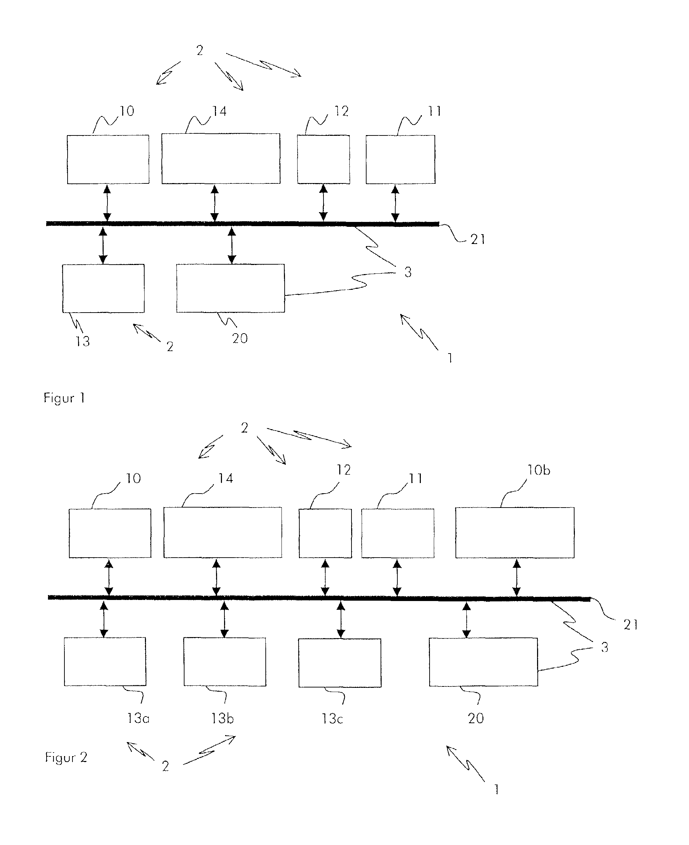

Fig. 1 zeigt ein schematisches Blockschaltbild einer erfindungsgemäßen Signalverarbeitungsvorrichtung 1. Die Signalverarbeitungsvorrichtung 1 ist vorzugsweise in Form eines integrierten Schaltkreises realisiert. Die Signalverarbeitungsvorrichtung 1 umfasst eine Einrichtung 10 zur Eingabe und Ausgabe von Daten, eine Speichereinrichtung 11, eine Einrichtung 12 für den direkten Speicherzugriff, Direct Memory Access (DMA), programmierbare Signalverarbeitungseinrichtungen 13 und vorzugsweise nicht-programmierbare Signalverarbeitungseinrichtungen 14. Die Einrichtungen 10 - 14 sind über einen Bus 21 miteinander verbunden. Außerdem ist eine Steuereinrichtung 20 vorgesehen, die ebenfalls mit dem Bus 21 verbunden ist. Die Steuereinrichtung 20 dient der Konfiguration/Skalierung der Signalverarbeitungsvorrichtung 1, die die Aufgabenverteilung hinsichtlich der Einrichtungen 10 - 14 und deren Kommunikation untereinander festlegt, wie später erläutert wird. Die Steuereinrichtung 20 ist vorzugsweise ein RISC-Prozessor, der ein Steuerprogramm zur Konfiguration der Signalverarbeitungsvorrichtung 1 umfasst.

Die Ein- und Ausgabeeinrichtungen 10 sind Module bzw. Komponenten der integrierten Schaltung der Signalverarbeitungsvorrichtung 1, die Ein- und Ausgabefunktionalität gemäß bekannten standardisierten Kommunikationsprotokollen bereit stellen. Die Ein- und Ausgabeeinrichtungen stellen beispielsweise die Funktionalität für Internetprotokoll-, ATM-, TDM-, TCM-, PCI-, Ethernet-, und/oder Utopia-Schnittstellen zur Verfügung. Entsprechende Teilschaltungen für eine integrierte Schaltung bzw. entsprechende elektronische Bausteine sind dem Fachmann bekannt.

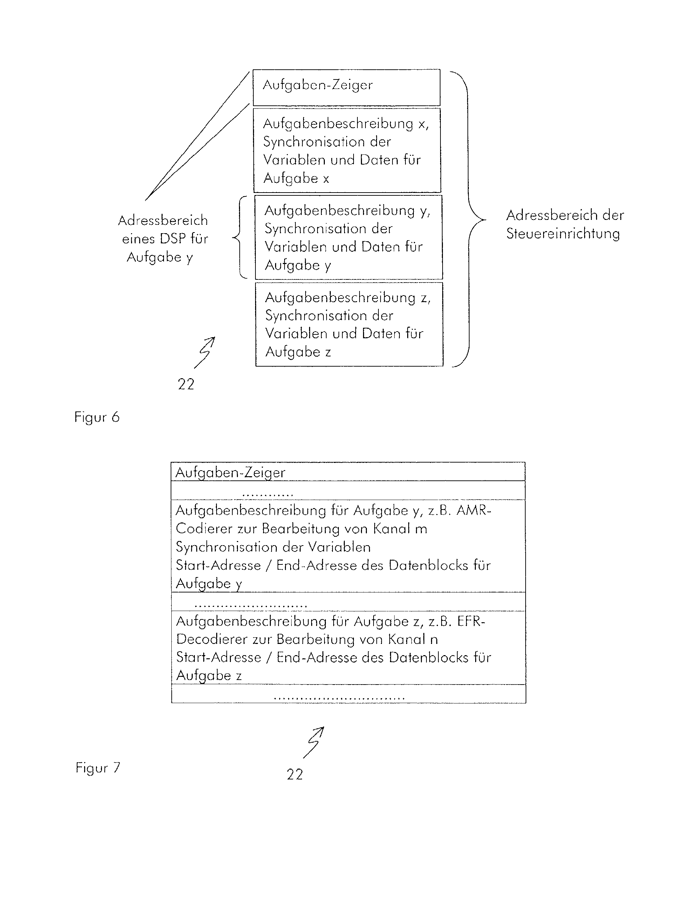

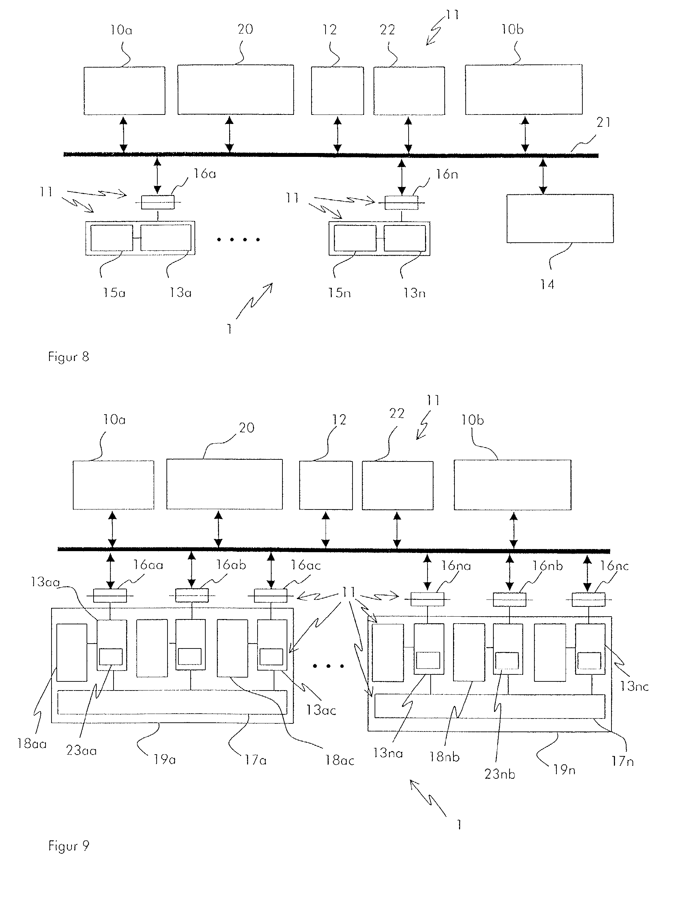

Die Speichereinrichtung 11 ist vorzugsweise ein RAM-Baustein oder entsprechende Teilschaltung, die in die integrierte Schaltung der Signalverarbeitungsvorrichtung 1 integriert ist. Es können verschiedene, dem Fachmann bekannte Arten von Speichern verwendet werden. Neben dem internen Speicher 1 1 können (nicht dargestellte) externe Speicher vorgesehen sein. Der interne Speicher 11 kann z.B. als CACHE-Speicher dienen und ein externer Speicher als Hauptspeicher vorgesehen sein. In den Fig. 1 und 2 ist der Speicher als eine einzelne Speichereinrichtung 11 dargestellt. Die Speichereinrichtung 11 kann jedoch auch mehrere Speicher umfassen, die einzelnen oder mehreren Einrichtungen 10, 12, 13,14, 20 zugeordnet sind, z.B. ein Speicher für die Steuereinrichtung 20 und ein Speicher für die Signalverarbeitungseinrichtungen 13/14. In den Figuren 8 und 9 sind beispielhaft Speichereinrichtungen 11 dargestellt, die eine Mehrzahl Speicher umfassen. Die Speichereinrichtung 11 selbst kann in Teilbereiche unterteilt sein, die einzelnen Einrichtungen 10, 12, 13,14, 20 zugeordnet sind. Die Speichereinrichtung 11 umfasst insbesondere einen Kommunikationsspeicher 22, dessen Aufteilung schematisch in Figur 6 dargestellt ist, bzw. ein Teilbereich der Speichereinrichtung 11 ist als Kommunikationsspeicher 22 vorgesehen.

Die programmierbaren Signalverarbeitungseinrichtungen sind vorzugsweise digitale Signalprozessoren, mit denen Daten entsprechend dem jeweiligen implementierten Programm verarbeitet werden. RISC-Prozessoren, insbesondere mit konfigurierbaren Befehlssatz können ebenfalls als programmierbare Signalverarbeitungseinrichtungen 13 vorgesehen sein. Je nach Einsatzzweck und Anforderungen umfasst die Signalverarbeitungsvorrichtung 1 zusätzlich nicht-programmierbare Signalverarbeitungseinrichtungen 14. Diese nicht-programmierbaren Signalverarbeitungseinrichtungen 14 sind unter anderem Hardware-Beschleuniger, mit denen insbesondere rechenaufwendige Teilbearbeitungen der Daten durchgeführt werden. Mit Hardware-Beschleunigern werden beispielsweise bestimmte mathematische Funktionen wie trigonometrische Berechnungen, Fast Fourier Transformationen von Daten effizient durchgeführt. Adaptive Filter, die beispielsweise bei der Sprachverarbeitung zur Echolöschung und Rauschunterdrückung benötigt werden, können ebenfalls als Hardware-Beschleuniger vorgesehen sein. Koeffizienten des adaptiven Filters werden z. B. mit dem digitalen Signalprozessor berechnet und an die Hardware-Beschleuniger übergeben.

Die erfindungsgemäße Signalverarbeitungsvorrichtung 1 ist für den Einsatz in unterschiedlichen Produkten wie Endbenutzergeräten, z.B. Mobiltelefone, Notebooks, home-office-gateways, (CPE) etc. und Netzwerkgeräten, z.B. Trunk-Gateways, vorgesehen. Die Signalverarbeitungsvorrichtung 1 ist vorzugsweise eine Vorrichtung zur Sprachverarbeitung, insbesondere für Spracherkennung, Sprachcodierung, z.B. gemäß den Standards G. 723, G. 726, Echolöschung und/oder Rauschunterdrückung. Die Signalverarbeitungsvorrichtung kann andererseits für die Verarbeitung von Video oder Bilddaten, z.B. gemäß den Standards H.323 oder den MPEG-Standard, vorgesehen sein. Mit der erfindungsgemäßen Signalverarbeitungsvorrichtung 1 kann ein breites Anforderungsprofil, d.h. unterschiedliche Anforderung an die Qualität und Quantität der Signalverarbeitung, also beispielsweise Datendurchsatz, Anzahl der Kanäle, Bearbeitungszeiten, eingesetzte Bearbeitungsalgorithmen und dergleichen, abgedeckt bzw. eine Skalierbarkeit/Konfigurierbarkeit bezüglich unterschiedlicher Einsatzbedingungen oder Anforderungen bereitgestellt werden.

Wie zuvor dargestellt, ist die erfindungsgemäße Signalverarbeitungsvorrichtung 1 ist grundsätzlich aus einer Mehrzahl verschiedener vorbestimmter Einrichtungen 2, die unterschiedliche Funktionalitäten wie Ein- und/oder Ausgabefunktion, Steuerfunktionen, Speicherfunktion, Speicherzugriffsfunktionen oder Signalverarbeitungsfunktionen bereit stellen, aufgebaut. Diese Einrichtungen 2 stellen Module, Komponenten oder Teilschaltungen des integrierten Schaltkreises bzw. der integrierten Schaltung dar, in dessen Form die Signalverarbeitungsvorrichtung realisiert ist.

Die erfindungsgemäße Signalverarbeitungsvorrichtung 1 ermöglicht eine Konfiguration/Skalierung sowohl bei der Herstellung als auch beim Betrieb der Signalverarbeitungsvorrichtung 1.

Der Erfindung liegt zunächst die Erkenntnis zugrunde, dass sich Einrichtungen bzw. Komponenten einer Signalverarbeitungsvorrichtung grundsätzlich durch unterschiedliche Relevanz für die Erfüllung von verschiedener Anforderungen oder Einsatzbedingungen auszeichnen. Ein- und Ausgabeeinrichtungen sowie Signalverarbeitungseinrichtungen besitzen hohe Relevanz für Anforderungen hinsichtlich Anzahl der Kanäle, Verarbeitungsgeschwindigkeit, Datendurchsatz, Verbindung zur Peripherie/Schnittstellen, Verarbeitungsalgorithmen und dergleichen. Zugehörige Steuereinrichtungen und der Bus bzw. das Bussystem hängen zumindest mittelbar von diesen Anforderung ab, da diese die Kommunikation zwischen vorgenannten Einrichtungen steuern und daher an die jeweiligen Einrichtungen bzw. die daraus aufgebaute Architektur angepasst sind.

Eine Skalierung an unterschiedliche Leistungsanforderungen kann im wesentlichen schon durch die Anzahl der verwendeten gleichen Einrichtungen erfolgen, während es für eine weitergehende Anpassung an unterschiedliche Anforderungen einer Verwendung von unterschiedlichen Arten und Anzahl der vorgenannten Einrichtungen bedarf. Der Erfindung liegt weiterhin die Idee zugrunde, die Signalverarbeitungsvorrichtung in Einrichtungen zu unterteilen, die einer Anpassung an unterschiedliche Anforderungen oder Einsatzbedingungen dienen, also anforderungsrelevanten Einrichtungen 2 darstellen, und solche, die unabhängig von den jeweiligen Anforderungen in der Signalverarbeitungsvorrichtung weitgehend unverändert implementiert sind, also eine Art Basisstruktur 3 bzgl. der Signalverarbeitungseinrichtung 1 darstellen. Dabei sind die Steuereinrichtungen 20 und der Bus/das Bussystem 21 trotz ihrer Relevanz für den Einsatzzweck bzw. das Anforderungsprofil als Basisstruktur 3 ausgeführt. Dazu werden die Steuereinrichtung 20 und der Bus 21 von vornherein für bestimmte, vorgegebene Arten von anforderungsrelevanten Einrichtungen 2 und eine bestimmte Anzahl dieser Einrichtungen 2 ausgelegt. Eine solche Steuereinrichtung 20 mit Bus 21 kann als eine Basisarchitektur 3 der Signalverarbeitungsvorrichtung 1 aufgefasst werden, wobei durch geeignete Kombination mit anforderungsrelevanten Einrichtungen 2 eine Skalierbarkeit bzw. Konfigurierbarkeit der Signalverarbeitungsvorrichtung 1 erzielt wird.

Die erfindungsgemäße Signalverarbeitungsvorrichtung 1 ist aus der Basisarchitektur 3 und einer Kombination von Einrichtungen 2, die entsprechend den gewünschten Leistungsdaten aus einer Gruppe von vorbestimmten Einrichtungen ausgewählt werden, aufgebaut. Die Gruppe vorbestimmter Einrichtungen umfasst zumindest Ein- und Ausgabeeinrichtungen 10, programmierbare Signalverarbeitungseinrichtungen 13 und nicht-programmierbare Signalverarbeitungseinrichtungen 14, wobei diese Gruppe ein begrenztes Sortiment für Einrichtungen 2 der jeweiligen Art, deren Spezifikationen bekannt sind, darstellt. Die Basisarchitektur 3 umfasst, wie zuvor beschrieben, im zumindest den Bus oder das Bus-System 21 und die Steuereinrichtung 20. Der Bus 21 und die Steuereinrichtung 20 sind derart ausgestaltet, dass diese im wesentlichen ohne weitere Anpassung mit einer unterschiedlichen Anzahl von Einrichtungen 2 aus der Gruppe der vorbestimmten Einrichtungen kombinierbar sind. Dabei sind die Basisarchitektur 3 und/oder die anforderungsrelevanten Einrichtungen 2 derart an einander angepasst, dass bei der Implementierung von unterschiedlichen Arten und Anzahl der vorgenannten Einrichtungen 2 im wesentlichen gleiche Zeitbedingungen erfüllt werden. Ein solches Zeitverhalten wird vorzugsweise durch die Konstruktion der Basisarchitektur 3, z.B. der Auslegung der Treiber, der Kapazität des Busses oder Bus-Systems, die Berücksichtigung der Signalverzögerungszeiten und dergleichen Charakteristika gewährleistet.

Die Steuereinrichtung 20 umfasst ein Steuerprogramm, das beim Starten der Signalverarbeitungsvorrichtung selbständig die Art und Anzahl der vorhandenen anforderungsrelevanten Einrichtungen 2, also z.B. von Einund Ausgabeeinrichtungen 10, programmierbaren und nicht-programmierbaren Signalverarbeitungseinrichtungen 13, 14 ermittelt. Dabei werden Adressen für die jeweiligen Einrichtungen 2 vergeben und in eine Adresstabelle der Steuereinrichtung 20 eingetragen. Eine derart ausgestaltete Basisarchitektur 3 mit Steuereinrichtung 20 schafft die Voraussetzung für ein Herstellungsverfahren, bei dem die Signalverarbeitungsvorrichtung 1 während der Herstellung skalierbar bzw. konfigurierbar ist, d.h. je nach gewünschten Leistungsdaten der Signalverarbeitungsvorrichtung 1 eine unterschiedliche Anzahl und Art von anforderungsrelevanten Einrichtungen 2 aus der Gruppe der vorbestimmten Einrichtungen in die Basisarchitektur 3 implementiert wird, ohne dass es einer aufwendigen neuen Layout-Konstruktion bedarf. Die Einrichtungen 2 werden nach Art eines Baukastensystems in die Basisarchitektur 3 implementiert, wodurch es nur geringfügiger Layout-Anpassungen bedarf und ein erneuter Testlauf der Software, insbesondere Verifikationstests zur Konnektivität der Architektur und der Basisfunktionalität der Signalverarbeitungsvorrichtung entfallen kann.

Die Herstellung der konfigurierbaren Signalverarbeitungsvorrichtung 1 basisiert auch auf der Erstellung der Gruppe von vorbestimmten anforderungsrelevanten Einrichtungen, die mit der diesbezüglich universell verwendeten Basisarchitektur 3 zusammenwirken. Bei der Herstellung der Signalverarbeitungsvorrichtung 1 wird zunächst entsprechend dem gewünschten Anforderungsprofil die Art und Anzahl der anforderungsrelevanten Einrichtungen 2 aus der Gruppe der vorbestimmten Einrichtungen bestimmt. Eine Gesamtarchitektur der Signalverarbeitungsvorrichtung 1 wird aus den ermittelten Einrichtungen 2 und der Basisarchitektur 3 erstellt, indem diese Einrichtungen 2 nach Art eines Baukastensystems in die Basisarchitektur 3 implementiert werden, wobei die Einrichtung 2 an dem Bus oder das Bus-System 21 mit unterschiedlichen Adressen "angehängt" werden und die Adressen in das Steuerprogramm der Steuereinrichtung 20 der Basisarchitektur 3 eingetragen werden. Anschließend wird eine Maske der Gesamtarchitektur der Signalverarbeitungsvorrichtung 1 erstellt und die Signalverarbeitungsvorrichtung 1 unter Verwendung der Maske hergestellt.

Das zuvor beschriebene Herstellungsverfahren ermöglicht in vorteilhafter Art und Weise eine Skalierung/Konfiguration der Signalverarbeitungsvorrichtung 1 während des Herstellungsprozesses. Die erfindungsgemäße Signalverarbeitungsvorrichtung 1 ermöglicht darüber hinaus auch eine Skalierbarkeit/Konfigurierbarkeit nach der Herstellung, d.h. eine Anpassung an unterschiedliche Anforderungsprofile bzw. die Bereitstellung unterschiedlicher Leistungsdaten beim Betrieb der Signalverarbeitungsvorrichtung 1 .

Fig. 2 zeigt eine weitere Ausführungsform der erfindungsgemäßen Signalverarbeitungsvorrichtung 1. Diese unterscheidet sich von der in Fig. 1 gezeigten Signalverarbeitungsvorrichtung 1 dadurch, dass sie eine Mehrzahl von Ein- und Ausgabeeinrichtungen 10a, 10b, programmierbare Signalverarbeitungseinrichtungen 13a, 13b, 13c und eine nicht-programmierbare Signalverarbeitungseinrichtung 14 aufweist. Je nach Anzahl der verwendeten Einrichtungen wird der Bus 21 zweckmäßigerweise durch ein Bussystem mit mehreren Bussen ersetzt. Einzelne Busse des (nicht in Detail dargestellten) Bus-Systems 21 können für bestimmte Aufgaben vorgesehen sein, z.B. die Kommunikation mit den Ein- und Ausgabeeinrichtungen 10, die Kommunikation mit der Steuereinrichtung 20 oder die Kommunikation der Signalverarbeitungseinrichtungen 13, 14 untereinander. Die in den Figuren 1 und 2 gezeigte Anzahl und Arten der anforderungsrelevanten Einrichtungen ist beispielhaft.

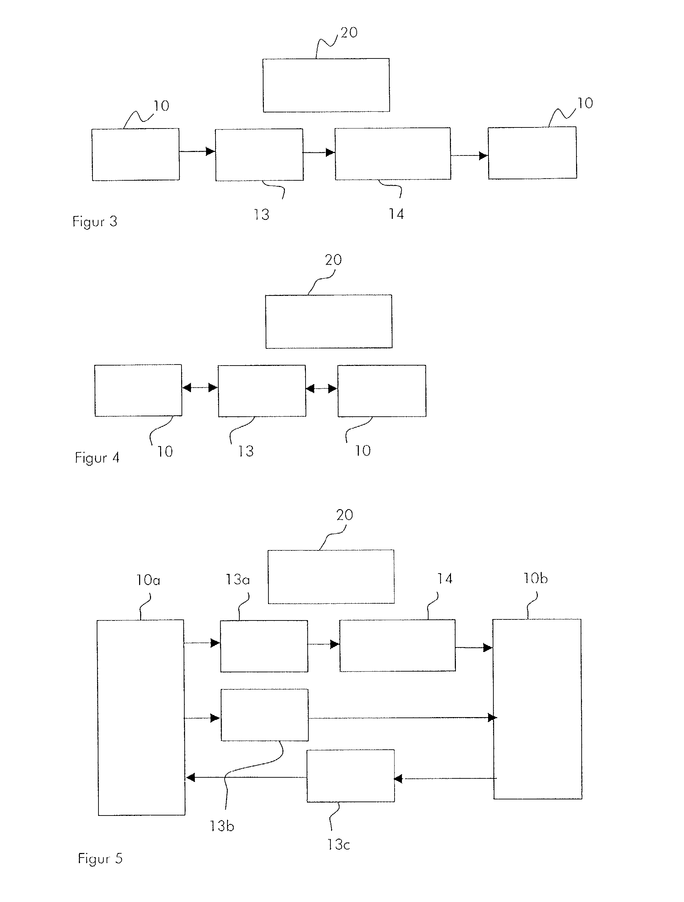

In den Fig. 3 und 4 sind unterschiedliche Konfigurationen der erfindungsgemäßen Signalverarbeitungsvorrichtung 1 der Figuren 1 und 2 und in Fig. 5 eine weitere beispielhafte Konfiguration der Signalverarbeitungsvorrichtung 1 der Fig. 2 gezeigt. Die Aufgabenverteilung bzw. Zuweisung von Aufgaben und die Datenkommunikation zwischen den Einrichtungen wird mittels der Steuereinrichtung 20 festgelegt.

Fig. 3 zeigt eine schematische Darstellung eines möglichen Datenflusses. Mittels der Eingabefunktion der Ein- und Ausgabeeinrichtung 10 werden zu verarbeitende Daten an eine programmierbare Signalverarbeitungseinrichtung 13 in Form eines digitalen Signalprozessors (DSP) übergeben. Diese Daten werden mittels einer nicht-programmierbaren Signalverarbeitungsvorrichtung 14 in Form eines Hardware-Beschleunigers nachbearbeitet und über die Ausgabefunktion der Ein- und Ausgabeeinrichtung 10 ausgegeben. Die Kommunikationspfade zwischen den Einrichtungen 10 - 14 sind durch die Steuereinrichtung 20 festgelegt. Die Kommunikation zwischen den Einrichtungen kann grundsätzlich mittels der Steuereinrichtung 20 durchgeführt werden, d.h. die Steuereinrichtung 20 ist in den Kommunikationspfad eingebunden. Bei einer bevorzugten Ausführungsform der Erfindung werden die Kommunikationspfade bei der Initialisierung der Signalverarbeitungsvorrichtung 1 festgelegt, indem Adressen in eine Adresstabelle, die den jeweiligen Einrichtungen 10 - 14 zugeordnet sind, eingetragen werden. Nach der Initialisierung der Signalverarbeitungsvorrichtung 1 erfolgt die Datenkommunikation zwischen diesen Einrichtungen 10-14 anhand der Adresstabellen, ohne dass es einen steuernden Eingriff der Steuereinrichtung 20 bedarf. Bei einem geänderten Anforderungsprofil bzw. Einsatzzweck der Signalverarbeitungsvorrichtung 1 kann diese mittels der Steuereinrichtung 20 jederzeit umkonfiguriert werden.

Bei einer bevorzugten Ausführungsform der Erfindung sind diejenigen Einrichtungen, die für die Bearbeitung der anstehenden Aufgaben nicht vorgesehen sind, abgeschaltet. Dieses kann beispielsweise durch ein Abschalten der Taktversorgung der jeweiligen Einrichtung erreicht werden. Auf diese Weise lässt sich der Energieverbrauch der Signalverarbeitungseinrichtung reduzieren, was insbesondere bei dem Einsatz in mobilen Geräten vorteilhaft ist.

Fig. 4 zeigt schematisch den Datenfluss zwischen Einrichtungen der Signalverarbeitungsvorrichtung 1 der Fig. 1 und 2 in einer Konfiguration mit geringen Leistungsanforderungen. Für die Signalverarbeitung wird lediglich ein digitaler Signalprozessor (DSP) 13 eingesetzt, der mit der ersten Ein- und Ausgabeeinrichtung 10a und der zweiten Ein- Ausgabeeinrichtung 10b zusammenarbeitet. Die Steuereinrichtung 20 ist schematisch als übergeordnete Einheit dargestellt, mittels der die gewünschte Konfiguration der Signalverarbeitungsvorrichtung erzeugt wird, die jedoch in die Signalverarbeitung der jeweiligen Konfiguration der Signalverarbeitungsvorrichtung 1 nicht unmittelbar eingebunden ist. In Fig. 4 sind die virtuellen Datenkommunikationspfade dargestellt. Physikalisch ist jeder Einrichtung 10 bis 14 und die Steuereinrichtung 20 über den Bus oder das Bus-System 21 miteinander verbunden.

Fig. 5 zeigt eine schematische Darstellung der Datenkommunikation in einer Konfiguration der Signalverarbeitungsvorrichtung 1 der Fig. 2 für komplexe Anwendungen. In der Konfiguration werden alle drei digitalen Signalprozessoren 13a, 13b und 13c sowie die beiden Ein- und Ausgabeeinrichtungen 10a und 10b verwendet. Den digitalen Signalprozessor 13a ist ein Hardware-Beschleuniger 14 nachgeschaltet. Die Verwendung mehrerer Ein- und Ausgabeeinrichtungen 10 ist immer dann zweckmäßig, wenn Daten über unterschiedliche Schnittstellen/Anschlüsse übermittelt werden. Die Ein- und Ausgabeeinrichtung 10a kann beispielsweise eine ATM-Schnittstelle und die Ein- und Ausgabeeinrichtung 10b eine Schnittstelle zu einem öffentlichen Telefonnetz sein. Der digitale Signalprozessor 10a führt beispielsweise eine Sprachcodierung mit anschließender Rauschunterdrückung mittels des Hardware-Beschleunigers 14 durch. Der digitale Signalprozessor 13b führt eine Sprachcodierung nach einem anderen Codierungsverfahren aus. Die Sprachdecodierung für beide Codierungsverfahren erfolgt mittels des digitalen Signalprozessors 13c.

Mit Bezug zu den Figuren 6 und 7 wird nachfolgend beispielhaft die Bestimmung der Aufgabenverteilung für die Signalverarbeitungseinrichtungen mittels der Steuereinrichtung beschrieben. Figur 6 zeigt schematisch die Aufteilung eines Kommunikationsspeicher der Signalverarbeitungseinrichtung und Figur 7 zeigt beispielhaft im Kommunikationsspeicher gespeicherte Aufgaben. Die Kommunikation mit den Signalverarbeitungseinrichtung wird durch die Steuereinrichtung initialisiert und gesteuert. Vorzugsweise ist ein DMA-Controller zur Unterstützung der Steuereinrichtung vorgesehen. Der Kommunikationsspeicher kann als ein Teilbereich des Speicher, oder als ein separater Speicher ausgebildet sein. Bei einer bevorzugten Ausführungsform ist der Kommunikationsspeicher ein Dual-Port- oder Multiport-Speicher, wie in den Figuren 8 und 9 dargestellt. In dem Kommunikationsspeicher ist ein Programm für die Initialisierung und die Rekonfiguration gespeichert. Während der Signalverarbeitung sind in dem Kommunikationsspeicher außerdem die Daten vor und nach ihrer Bearbeitung zwischengespeichert. Dazu umfasst der Kommunikationsspeicher sogenannte Task Buffer. Wie in Figur 6 dargestellt, ist für die Signalverarbeitungseinrichtung, z.B. einen Digitaler Signalprozessor (DSP), der Adressbereich des Kommunikationsspeichers verfügbar, der die jeweilige Aufgabenbeschreibung der Signalverarbeitungseinrichtung umfasst, also der Adressbereich des jeweiligen Task Buffer. Die Zuweisung des Adressbereiches erfolgt mittels eines Aufgaben-Zeigers. Die Steuereinrichtung bzw. der DMA-Controller kann auf den gesamten Adressbereich des Kommunikationsspeichers zugreifen. Die Steuereinrichtung bzw. der DMA-Controller schreiben in den Kommunikationsspeicher die Aufgabenbeschreibung, wie sie beispielhaft in Figur 7 dargestellt ist. Der Kommunikationsspeicher stellt für die Signalverarbeitungseinrichtung einen zirkularer Zwischenspeicher dar, der hardware- oder softwaregesteuert ist. Bei einem softwaregesteuerten Zwischenspeicher nutzt der DSP den Aufgaben-Zeiger zur Adressierung der nächsten Aufgabe. Bei einem hardwaregesteuerten Zwischenspeicher ist dem DSP automatisch die erste Aufgabe am Anfang der Aufgabenliste zugeordnet. Wenn der DSP eine Aufgabe abgearbeitet hat, werden die Variablen und Daten synchronisiert und der Aufgaben-Zeiger erhöht.

Figur 8 zeigt eine bevorzugte Weiterbildung der erfindungsgemäßen Signalverarbeitungsvorrichtung. In Abhängigkeit von den gewünschten Leistungsdaten umfasst die Signalverarbeitungsvorrichtung 1 eine entsprechende Anzahl von digitalen Signalprozessoren 13a bis 13n, wobei jeder digitale Signalprozessor eine bestimmte Anzahl von Kanälen parallel bearbeiten kann. Die Speichereinrichtung 11 umfasst eine Mehrzahl Speicher 15, 16, 22. Jedem digitalen Signalprozessor 13a bis 13n ist ein Speicher 15a bis 15n zugeordnet, in dem das Programm des digitalen Signalprozessors gespeichert ist und zu bearbeitende Daten zwischengespeichert werden. Die digitale Signalprozessoren 13a bis 13n sind mittels Speichern mit zweifachen Anschluss (Dual-port-shared-memory) 16a bis 16n mit dem Bus oder dem Bussystem 21 verbunden. Die Speicher 16a bis 16n ermöglichen einen effizienten Speicherzugriff und somit schnelle Bearbeitungszeiten, da Lese- und Schreibvorgänge parallel ausführbar sind. Weiterhin ist ein Kommunikationsspeicher 22 vorgesehenen.

Figur 9 zeigt eine weitere bevorzugte Weiterbildung der erfindungsgemäßen Signalverarbeitungsvorrichtung 1 der Figur 8. Im Unterschied zu Figur 8 umfasst die Speichereinrichtung 11 der Figur 9 zusätzlich einen gemeinsamen Speicher 17a, ..., 17 n für eine Mehrzahl von digitalen Signalprozessoren 13 aa - 13 ac, ... , 13n a - 13 nc. Die digitalen Signalprozessoren 13 aa - 13 ac, ... , 13 na - 13 nc weisen außerdem jeweils einen Cache-Speicher 23 aa - 23 ac, ... , 23 na -23 nc auf. Der gemeinsame Speicher 17a, 17n enthält das Programm und Konstanten/Parameter, die für die jeweiligen angeschlossenen digitalen Signalprozessoren 13 identisch sind. Der gemeinsame Speicher 17 ist je nach Anzahl der angeschlossenen digitalen Signalprozessoren 13 ein Dual-Port-, Tripple-Port- oder Multiple-Port-RAM. Der in Figur 9 gezeigte gemeinsame Speicher 17a, 17n ist ein Tripple-Port-RAM. Die digitalen Signalprozessoren 13 xa, xb ,xc des jeweiligen gemeinsamen Speicher 17x bilden zusammen mit den zugehörigen privaten Speichern 18x der digitalen Signalprozessoren 13 xa, xb, xc, einen Prozessorcluster 19x. Jede Signalverarbeitungsvorrichtung 1 kann eine Mehrzahl von Prozessorclustern 19 umfassen. Die digitale Signalprozessoren 13 aa - 13 ac, ..., 13 na - 13 nc sind mittels Speichern mit zweifachen Anschluss (Dual-port-shared-memory) 16 aa, ..., 16 ac, ..., 16 na, ..., 16 nc mit dem Bus oder dem Bussystem 21 verbunden.

## Patentansprüche

1. Signalverarbeitungsvorrichtung (1) umfassend einen Speicher (11, 15, 16, 17, 18, 22), Einrichtungen für den Speicherzugriff (12), Einrichtungen für die Ein- und/oder Ausgabe (10) und Einrichtungen für die Signalverarbeitung (13, 14) sowie zumindest eine Steuereinrichtung (20) und einen Bus (21), der den Speicher (11, 15, 16, 17, 18, 22), die Einrichtungen (2, 10, 12, 13, 14) und die zumindest eine Steuereinrichtung (20) miteinander verbindet, wobei die Art und die maximale Anzahl der Einrichtungen (2, 10, 12, 13, 14) vorgegeben ist und die Signalverarbeitungsvorrichtung (1) derart konfigurierbar ist, dass der Bus (21) und die Steuereinrichtung (20) mit nach Art und/oder Anzahl unterschiedlichen vorbestimmten Einrichtungen (2, 10, 12, 13, 14) betreibbar sind.

2. Signalverarbeitungsvorrichtung (1) nach Anspruch 1, **dadurch gekennzeichnet, dass** der Bus (21) und die Steuereinrichtung (20) derart ausgestaltet sind, dass beim Betrieb des Busses (21) und der Steuereinrichtung (20) mit den nach Art und/oder Anzahl unterschiedlichen, vorbestimmten Einrichtungen (2, 10, 12, 13, 14) im wesentlichen gleiche Zeitbedingungen erfüllt sind.

3. Signalverarbeitungsvorrichtung (1) nach Anspruch 1 oder 2, **dadurch gekennzeichnet, dass** die vorbestimmten Einrichtungen (2), die zur Konfiguration der Signalverarbeitungsvorrichtung (1) verwendet werden, Einrichtungen der folgenden Art umfassen:
- Einrichtungen für den direkten Speicherzugriff (12),
- Ein- und/oder Ausgabeeinrichtungen (10),
- programmierbare Signalverarbeitungseinrichtungen (13),
- nicht-programmierbare Signalverarbeitungseinrichtungen (14).

4. Signalverarbeitungsvorrichtung (1) nach einem der Ansprüche 1 bis 3, **dadurch gekennzeichnet, dass** die vorbestimmten Einrichtungen (2, 10, 12, 13, 14) an den Betrieb mit dem Bus (21) und der Steuereinrichtung (20) angepasst sind.

5. Signalverarbeitungsvorrichtung (1) nach einem der Ansprüche 1 bis 4, **dadurch gekennzeichnet, dass** die Steuereinrichtung (20) zumindest die Aufgabenverteilung der Signalverarbeitungseinrichtungen (13,14) der vorbestimmten Einrichtungen (2, 10, 12, 13, 14) bestimmt und/oder die Datenkommunikation zwischen den vorbestimmten Einrichtungen (2, 10, 12, 13, 14) steuert.

6. Signalverarbeitungsvorrichtung (1) nach einem der Ansprüche 1 bis 5, **dadurch gekennzeichnet, dass** die Steuereinrichtung (20) und/oder die vorbestimmten Einrichtungen (2, 10, 12, 13, 14) derart ausgestaltet sind, dass mittels der Steuereinrichtung (20) einzelne vorbestimmte Einrichtungen (2, 10, 12, 13, 14) ein- und abschaltbar sind.

7. Signalverarbeitungsvorrichtung (1) nach einem der Ansprüche 1 bis 6, **dadurch gekennzeichnet, dass** eine Rahmen-Konfiguration der Signalverarbeitungsvorrichtung (1) bei der Herstellung der Signalverarbeitungsvorrichtung (1) vorgeben wird.

8. Signalverarbeitungsvorrichtung (1) nach einem der Ansprüche 1 bis 7, **dadurch gekennzeichnet, dass** unterschiedliche Konfiguration der Signalverarbeitungsvorrichtung (1) nach deren Herstellung mittels der Steuereinrichtung (20) einstellbar sind.

9. Verfahren zum Betreiben einer konfigurierbaren Signalverarbeitungsvorrichtung (1) nach einem der Ansprüche 1 bis 8, **dadurch gekennzeichnet, dass** die Signalverarbeitungsvorrichtung (1) in unterschiedlichen Konfigurationen betreibbar ist, wobei die Auswahl der Konfiguration in Abhängigkeit von den jeweiligen Anforderungen an die Signalverarbeitungsvorrichtung (1) erfolgt und eine Änderung der Konfiguration statisch und/oder dynamisch durchgeführt wird.

10. Verfahren zur Herstellung einer Signalverarbeitungsvorrichtung (1), umfassend eine Mehrzahl von Einrichtungen (2, 10, 12, 13, 14) aus einer Gruppe vorbestimmter Einrichtungen (2), einen Speicher (11, 15, 16, 17, 18, 22), zumindest eine Steuereinrichtung (20) und einen Bus (21), der die Einrichtungen (2, 10, 12, 13, 14), den Speicher (11, 15, 16, 17, 18, 22) und die zumindest eine Steuereinrichtung (20) miteinander verbindet,
- wobei in Abhängigkeit des Einsatzzweckes die Art und Anzahl der benötigten Einrichtungen (2, 10, 12, 13, 14) aus der Gruppe der vorbestimmten Einrichtungen (2) ermittelt wird,
- eine Basisarchitektur (3), umfassend einen Bus (21) und eine Steuereinrichtung (20), verwendet wird, wobei die Basisarchitektur (3) derart ausgestaltet ist, dass diese mit einer unterschiedlichen Anzahl und Art von Einrichtungen (2, 10, 12, 13, 14) aus der Gruppe der vorbestimmten Einrichtungen (2) zusammenschaltbar ist,
- eine Gesamtarchitektur der Signalverarbeitungsvorrichtung (1) aus den ermittelten Einrichtungen (2, 10, 12, 13, 14) und der Basisarchitektur (3) derart erstellt wird, dass diese Einrichtungen (2, 10, 12, 13, 14) nach Art eines Baukastensystems in die Basisarchitektur (3) implementiert werden,
- eine Maske der Gesamtarchitektur der Signalverarbeitungsvorrichtung (1) erstellt wird und
- die Signalverarbeitungsvorrichtung (1) unter Verwendung der Maske hergestellt wird.
